# EUROPÄISCHE PATENTANMELDUNG

(11) **EP 0 871 104 A1**
(43) Veröffentlichungstag der Anmeldung: **14.10.1998**
(21) Anmeldenummer: 98106309.2
(22) Anmeldetag: 07.04.1998
(51) Int. Cl.: G05D 25/02, H05B 37/02, H05B 39/04, H05B 41/392, H02J 13/00

(54) **Beleuchtungs-Steuereinrichtung**

(30) Priorität: 11.04.1997 DE 29706521 U
(71) Anmelder: TRILUX-LENZE GmbH & Co. KG, D-59759 Arnsberg (DE); Leax Limited, London EC 4 CE (GB)
(72) Erfinder: Hasemann, Fred, Dr.-Ing., 59759 Arnsberg (DE); Mertens, Ferdinand, Dipl.-Ing., 59755 Arnsberg (DE); Nattkemper, Guido, Dipl.-Phys., 59425 Unna (DE)
(74) Vertreter: Selting, Günther, Dipl.-Ing.

(57) **Zusammenfassung**

In einem Raum (10), der zahlreiche Beleuchtungsgeräte (11) enthält, ist ein Beleuchtungsstärkesensor (12) installiert, der die Gesamtbeleuchtungsstärke mißt, welche sich aus Tageslicht und Kunstlicht ergibt. Diese Gesamtbeleuchtungsstärke wird an eine Kontrolleinheit (CU) geliefert, welche in einer ersten Betriebsart "tageslichtabhängiger Regelbetrieb" die Gesamtbeleuchtungsstärke konstanthält. Die Kontrolleinheit (CU) ist drahtlos mit einem Signalgeber (14) verbunden, an dem eine zweite Betriebsart "Konstant-Kunstlichtbetrieb" einstellbar ist. Bei Einstellung dieser Betriebsart werden die Beleuchtungsgeräte (11) mit einer wählbaren konstanten Leuchtstärke betrieben, die als prozentualer Anteil der maximalen Leuchtstärke definiert sein kann.

## Beschreibung

Die Erfindung betrifft eine Beleuchtungs-Steuereinrichtung mit einer Kontrolleinheit, die Signale von einem Beleuchtungsstärkesensor empfängt und mindestens ein Beleuchtungsgerät in tageslichtabhängigem Regelbetrieb betreibt.

Bekannt sind Beleuchtungs-Steuereinrichtungen, mit denen sich an einem Arbeitsplatz oder in einem Raum eine bestimmte Gesamtbeleuchtungsstärke einstellen läßt, die beispielsweise 500 lx, 300 lx, 200 lx, ... betragen kann. Unter Gesamtbeleuchtungsstärke wird hier die Summe aus Tageslicht und Kunstlicht verstanden. Diese Gesamtbeleuchtungsstärke wird auf einem vorgegebenen Wert (Sollwert) konstantgehalten. Wenn das Tageslicht abnimmt, wird das Kunstlicht hochgeregelt, so daß die Gesamtbeleuchtungsstärke konstant bleibt. Bei ausreichend hohem Tageslicht wird der Kunstlichtanteil immer in ein Minimum gefahren. Dadurch ist eine unterschiedliche Ausleuchtung verschiedener Bereiche (Lichtszenenrealisierung) nicht möglich. Da bei ausreichendem Tageslichtanteil der Kunstlichtanteil minimal ist, können sich ferner Situationen ergeben, in denen der Kunstlichtanteil für bestimmte Sehaufgaben, die starke Beleuchtung erfordern, nicht ausreichend ist. Vorteilhaft ist dieses System hinsichtlich der Energieeinsparung jedoch bei geringem Tageslichtanteil, weil in diesem Fall der Kunstlichtanteil so geregelt wird, daß die regional ausgewählten Gesamtbeleuchtungsstärken konstantgehalten werden.

Der Erfindung liegt die Aufgabe zugrunde, eine Beleuchtungs-Steuereinrichtung zu schaffen, die unterschiedliche wählbare Beleuchtungssituationen ermöglicht.

Die Lösung dieser Aufgabe erfolgt erfindungsgemäß mit den im Anspruch 1 angegebenen Merkmalen.

Bei der erfindungsgemäßen Beleuchtungs-Steuereinrichtung ist die Kontrolleinheit zwischen den Betriebsarten "Konstant-Kunstlichtbetrieb" und "tageslichtabhängiger Regelbetrieb" umschaltbar. Bei der Betriebsart "Konstant-Kunstlichtbetrieb" werden bestimmte Lichtabgabewerte des Beleuchtungsgerätes eingestellt und für die Dauer dieser Betriebsart beibehalten. Die Lichtabgabewerte können als prozentuale Bestandteile der Lichtabgabekapazität einer Leuchte angegeben werden, beispielsweise 100 %, 80 %, 50 %, ..., 10 %. Es besteht somit die Möglichkeit, unabhängig von dem jeweiligen Tageslichteinfall unterschiedliche Beleuchtungsstärken zu realisieren, beispielsweise die Beleuchtung trotz Tageslichteinfalls voll einzuschalten, oder bei geringem Tageslichteinfall eine schwache Kunstlichtbeleuchtung einzuschalten. Auf diese Weise lassen sich Lichtinszenierungen durchführen, wobei unterschiedliche Bereiche in einem Raum unterschiedlich beleuchtet werden. Dies spielt insbesondere bei Bildschirmarbeitsplätzen eine wichtige Rolle, um Blendwirkungen oder Unterbeleuchtungen zu vermeiden. Die Erfindung ermöglicht somit einerseits einen tageslichtabhängigen Regelbetrieb und andererseits die Einrichtung einer Szenenlichtprogrammierung.

Vorzugsweise ist der Kontrolleinheit ein Signalgeber zugeordnet, der mehrere abrufbare Speicherstellen für wählbare Lichtabgabewerte aufweist. Der Signalgeber ist vorzugsweise ein Fernbedienungsgerät, das drahtlos mit der Kontrolleinheit kommuniziert. Der Benutzer kann somit an dem Signalgeber unterschiedliche Lichtabgabewerte (Prozentwerte) selektieren bzw. auswählen.

Bei einer besonders zwecksmäßigen Ausführungsform der Erfindung enthält der Signalgeber einen Up-/Down-Regler zur Veränderung des Inhalts der Speicherstellen und/oder zur Veränderung des Sollwertes der Gesamtbeleuchtungsstärke. Auf diese Weise kann der Benutzer die Speicherstellen des Signalgebers programmieren und die gewünschten Sollwerte der Gesamtbeleuchtungsstärke bzw. die Lichtabgabewerte (Prozentwerte) selbst bestimmen und verändern.

Weitere Vorteile und Merkmale der Erfindung ergeben sich aus der nachfolgenden Beschreibung eines Ausführungsbeispiels und den Unteransprüchen.

Im folgenden wird ein Ausführungsbeispiel der Erfindung unter Bezugnahme auf die Zeichnungen näher erläutert.

Es zeigen:
- Fig. 1: eine schematische Darstellung eines zu beleuchtenden Raumes mit der Kontrolleinheit und dem Signalgeber und
- Fig. 2: ein Schaltbild der Kontrolleinheit mit angeschlossenem Beleuchtungsgerät.

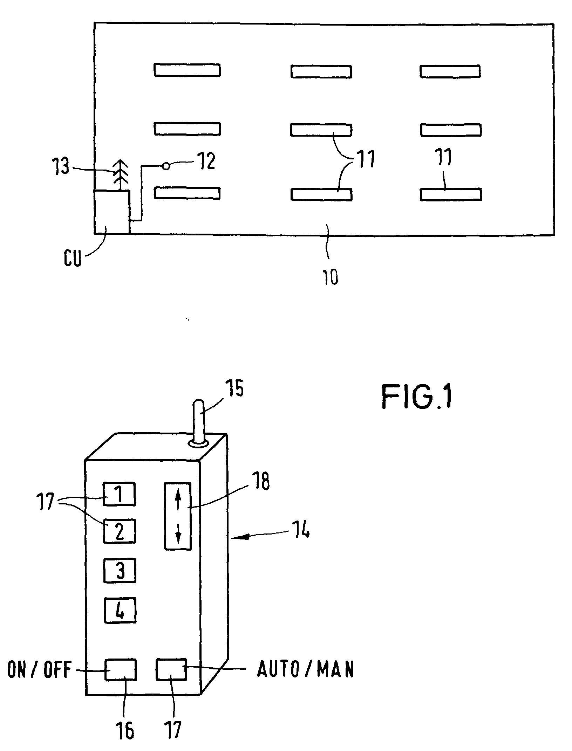

In Fig. 1 ist ein zu beleuchtender Raum 10 in Draufsicht dargestellt, wobei die in diesem Raum installierten Beleuchtungsgeräte mit 11 bezeichnet sind. Bei den Beleuchtungsgeräten handelt es sich um Leuchtstofflampen, die jeweils mit einem elektronischen Vorschaltgerät ausgestattet sind. In dem Raum 10 befindet sich ein Beleuchtungsstärkesensor 12, der die Gesamtbeleuchtungsstärke mißt, die sich aus dem einfallenden Tageslicht und dem durch die Beleuchtungsgeräte 11 erzeugten Kunstlicht ergibt. Dieser Beleuchtungsstärkesensor 12 ist mit einer Kontrolleinheit CU verbunden, welche die Beleuchtungsgeräte 11 steuert.

Die Kontrolleinheit CU weist eine Empfangsantenne 13 auf, welche Signale von einem mobilen tragbaren Signalgeber 14 empfängt. Der Signalgeber 14 ist mit einer Sendeantenne 15 ausgestattet. Er weist eine On-/Off-Taste 16 zum Ein-/Ausschalten sowie eine Betriebsarten-Wähltaste 17 auf. Mit der Betriebsarten-Wähltaste 17 kann zwischen der Betriebsart "tageslichtabhängiger Regelbetrieb" AUTO und der Betriebsart "Konstant-Kunstlichtbetrieb" MAN umgeschaltet werden. Der Signalgeber 14 enthält ferner einen Speicher mit mehreren Speicherstellen, deren Inhalte durch Betätigen von Wähltasten 17 aufgerufen werden können. Die mit 1 bis 4 bezeichneten Wähltasten 17 dienen dazu, bestimmte Sollwerte für die Betriebsart AUTO abzurufen, beispielsweise 500 lx, 300 lx, 200 lx und 100 lx. Der Signalgeber 14 übermittelt den jeweils aufgerufenen Sollwert drahtlos an die Kontrolleinheit CU, wenn die Betriebsart AUTO eingestellt ist. Die Kontrolleinheit CU steuert dann die Beleuchtungsgeräte 11 in der Weise, daß die von dem Beleuchtungsstärkesensor 12 gemessene Gesamtbeleuchtungsstärke gleich dem von dem Signalgeber 14 übermittelten Sollwert der Gesamtbeleuchtungsstärke ist. Auf diese Weise kann durch Betätigung der Wähltasten 17 die Gesamtbeleuchtungsstärke vorgegeben werden, die von der Kontrolleinheit CU unabhängig von der Größe des einfallenden Tageslichts konstantgehalten wird.

Ist an dem Signalgeber 14 die Betriebsart MAN eingestellt, gibt der Signalgeber an die Kontrolleinheit CU einen Lichtabgabewert, der als Prozentsatz der maximalen Leuchtleistung der Beleuchtungsgeräte 11 angegeben sein kann, also beispielsweise 100 %, 80 % ... Dieser Lichtabgabewert kann durch einen Up-/Down-Regler 18 am Signalgeber 14 verändert werden. Durch Drücken des Up-/Down-Reglers 18 in Aufwärtsrichtung wird der Prozentsatz erhöht und durch Drücken des Up-/Down-Reglers in Abwärtsrichtung wird der Prozentsatz verringert.

Es ist auch möglich, einen bestimmten Prozentsatz, der mit dem Up-/Down-Regler 18 eingestellt wurde, bei der Betriebsart MAN auf eine Speicherstelle zu übertragen, deren Inhalt durch eine Wähltaste 17 abgerufen werden kann. Der jeweils eingestellte Prozentsatz wird in die Speicherstelle eingespeichert, wenn die betreffende Wähltaste 17 länger als eine bestimmte Zeit (z.B. 2 sec.) gedrückt gehalten wird. Durch kurzzeitiges Antippen der betreffenden Wähltaste wird dann dieser Prozentsatz abgerufen und an die CU übertragen. Auf diese Weise können bei dem vorliegenden Ausführungsbeispiel vier Prozentsätze (Lichtabgabewerte) vom Benutzer gespeichert und bei Bedarf abgerufen werden.

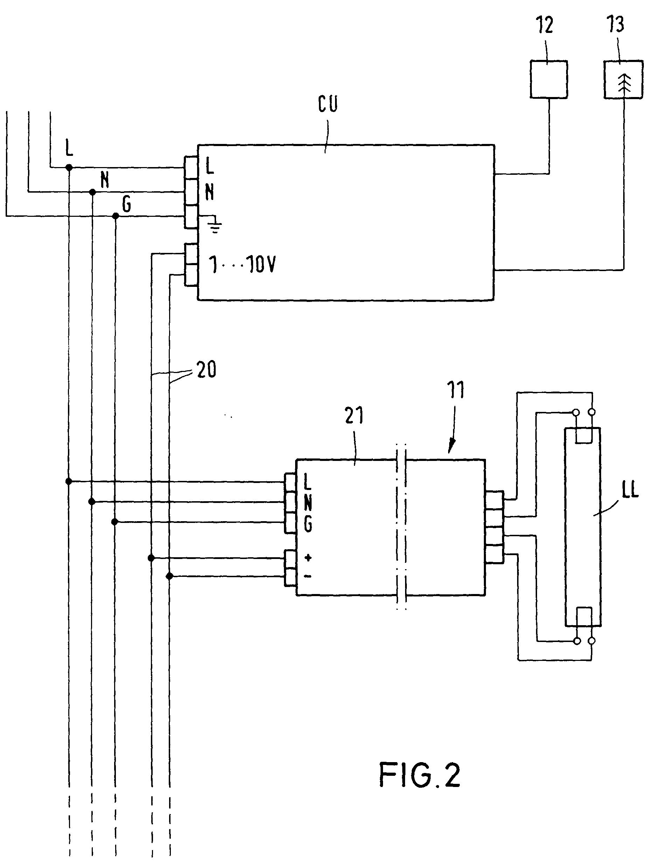

In Fig. 2 ist die Kontrolleinheit CU dargestellt, die mit der Empfangsantenne 13 versehen ist und von dem Beleuchtungsstärkesensor 12 ein der momentanen Gesamtbeleuchtungsstärke entsprechendes Signal empfängt. Die Kontrolleinheit CU ist über Steuerleitungen 20 mit jeder Beleuchtungseinheit 11 verbunden. An die Steuerleitungen 20 legt die Kontrolleinheit CU ein Steuersignal in Form einer Gleichspannung von 1 bis 10 V, das die Beleuchtungsstärke der Beleuchtungseinheit steuert. Die Beleuchtungseinheit 11 besteht aus einem elektronischen Vorschaltgerät 21 und einer daran angeschlossenen Leuchtstofflampe LL.

Die Steuereinheit CU und das Vorschaltgerät 21 sind über Netzleitungen L, N und G an das Versorgungsnetz angeschlossen. L kennzeichnet die Phasenleitung, N den Nulleiter und G den Masse- oder Erdanschluß.

## Patentansprüche

1. Beleuchtungs-Steuereinrichtung mit einer Kontrolleinheit (CU), die Signale von einem Beleuchtungsstärkesensor (12) empfängt und mindestens ein Beleuchtungsgerät (11) in tageslichtabhängigem Regelbetrieb betreibt,
**dadurch gekennzeichnet,**
daß an der Kontrolleinheit (CU) unterschiedliche Lichtabgabewerte des Beleuchtungsgerätes (11) einstellbar sind, und daß die Kontrolleinheit zwischen den Betriebsarten "Konstant-Kunstlichtbetrieb" (MAN) und "tageslichtabhängiger Regelbetrieb" (AUTO) umschaltbar ist.

2. Beleuchtungs-Steuereinrichtung nach Anspruch 1, dadurch gekennzeichnet, daß der Kontrolleinheit (CU) ein Signalgeber (14) zugeordnet ist, der mindestens eine abrufbare Speicherstelle für einen wählbaren Lichtabgabewert aufweist.

3. Beleuchtungs-Steuereinrichtung nach Anspruch 2, dadurch gekennzeichnet, daß der Kontrolleinheit (CU) ein Signalgeber (14) zugeordnet ist, der einen Up-/Down-Regler (18) zur Veränderung des Inhalts abrufbarer Speicherstellen und/oder zur Veränderung des Sollwertes des Gesamtbeleuchtungsstärke enthält.

4. Beleuchtungs-Steuereinrichtung nach Anspruch 3, dadurch gekennzeichnet, daß der Signalgeber (14) einen Betriebsarten-Wählschalter (17) zum Umschalten zwischen beiden Betriebsarten aufweist, wobei der Up-/Down-Regler (18) bei Einstellung der Betriebsart des tageslichtabhängigen Regelbetriebes (AUTO) den Sollwert der Gesamtbeleuchtungsstärke verändert.

5. Beleuchtungs-Steuereinrichtung nach einem der Ansprüche 1-4, dadurch gekennzeichnet, daß der Kontrolleinheit (CU) ein manuell bedienbarer Signalgeber (14) zugeordnet ist, der wahlweise die Sollwert-Signale der Lichtabgabewerte oder die Sollwerte der Gesamtbeleuchtungsstärke drahtlos an die Kontrolleinheit (CU) liefert.
